# FASCICULE DE BREVET EUROPEEN

(11) **EP 0 311 526 B1**
(45) Date de publication et mention de la délivrance du brevet: **27.01.1993**
(21) Numéro de dépôt: 88402538.8
(22) Date de dépôt: 07.10.1988
(51) Int. Cl.: B30B 9/24, B01D 33/04, B01D 33/048

(54) **Filtre-presse à toiles filtrantes sans fin**
Filterpresse mit endlosen Filterbändern
Endless filter press

(30) Priorité: 07.10.1987 FR 8713859
(43) Date de publication de la demande: 12.04.1989
(73) Titulaire: Gaudfrin, Guy, F-78860 Saint-Nom-la-Bretéche (FR)
(72) Inventeur: Gaudfrin, Guy, F-78860 Saint-Nom-la-Bretéche (FR)
(74) Mandataire: Clanet, Denis

(56) Documents cités:
- EP-A- 0 013 549
- DE-C- 723 195
- FR-A- 2 169 922
- FR-A- 2 324 447
- GB-A- 2 031 294

## Description

L'invention concerne un filtre-presse à toiles filtrantes sans fin.

Il existe aujourd'hui plusieurs types de presses continues utilisant deux toiles filtrantes sans fin convenablement tendues entre lesquelles la matière à essorer est introduite puis pressée progressivement à l'aide de rouleaux successifs.

Ainsi, le brevet GB-2 031 294 décrit un filtre-presse comprenant un châssis, deux toiles filtrantes en boucle fermée, des rouleaux de renvoi montés sur le châssis et définissant des trajets pour les deux toiles, lesdits trajets étant au moins partiellement contigus, et plusieurs ensembles de rouleaux placés de part et d'autre des toiles filtrantes le long de leurs parties de trajets contigus et pinçant les toiles ; l'un des rouleaux consistant en un tambour, et lesdites toiles filtrantes entourant ledit tambour sur une majeure partie de sa circonférence et passant entre ledit tambour et lesdits rouleaux pinceurs.

Lorsque les toiles passent sur un rouleau en s'enroulant suffisamment sur lui, la pression nécessaire à l'essorage de la matière est engendrée par la tension de la toile extérieure.

Lorsque les toiles passent entre deux rouleaux juxtaposés, la pression est engendrée par le coincement de la matière entre les rouleaux. L'essorage est dans ce cas facilité par un effet de cisaillement du à la déformation simultanée ou fluage de la matière.

A ce sujet, il faut mentionner FR-A-2 169 922 qui décrit un dispositif de traitement en continu d'une bande par compression comprenant un tambour tournant sur lequel se déplace ladite bande, une bande de forme tournant avec ladite bande en la maintenant autour du tambour, un manchon extérieur immobile entourant l'ensemble précédent en laissant un intervalle de passage et des chaînes à rouleaux disposées entre la bande de forme et le manchon pour diminuer le frottement.

Les presses à toiles connues diffèrent donc entre elles par la façon de disposer les rouleaux simples ou les rouleaux pinceurs, la façon de tendre et de guider les toi les, par les systèmes d'égouttage préalables, etc.

Si elles donnent satisfaction dans l'état actuel de la technique, elles ont cependant des inconvénients qui limitent leurs performances et entraînent des frais d'exploitation non négligeables.

Pour exercer une pression élevée et assurer leur entraînement, il faut tendre les toiles filtrantes aussi fortement que possible. La résistance des toiles et de leurs jonctions limite par conséquent les possibilités de la presse.

On demande en effet aux toiles d'être capables à la fois de filtrer la matière sans laisser passer de solides et de résister à de très hautes tensions, ce qui est incompatible.

On choisit, autant que faire se peut, une toile dont les caractéristiques sont un compromis entre ces deux qualités contraires au détriment des performances.

Lorsqu'on a recours à des rouleaux pinceurs entre lesquels les toiles sont coincées avec la matière, le choix est encore plus sévère. On est de plus tenu d'utiliser des toiles sans fin confectionnées en usine, dont le remplacement oblige à démonter la structure de la machine.

Un autre inconvénient commun aux presses à toiles est de ne pas pouvoir contenir latéralement la matière lorsqu'elle flue sous la pression avant de se consolider. Cela oblige à alimenter les toiles au centre sur une largeur réduite afin de laisser de chaque côté une place suffisante à la matière pour qu'elle ne s'échappe pas.

On sait aussi que, pour parvenir à des siccités proches de la limite de pressabilité, il faut utiliser l'effet de cisaillement produit par des rouleaux juxtaposés en procédant par un aussi grand nombre que possible d'étages de compression, ce oui conduit à un investissement important.

Cela multiplie en effet les paires de rouleaux juxtaposés de construction robuste pour éviter toute flexion nuisible au coincement et dont l'un des deux est nécessairement appliqué sur l'autre par une articulation à vérins.

La présente invention propose donc un filtre-presse comprenant un châssis, deux toiles filtrantes en boucle fermée, des rouleaux de renvoi montés sur le châssis et définissant des trajets pour les deux toiles, lesdits trajets étant au moins partiellement contigus, et plusieurs ensembles de rouleaux placés de part et d'autre des toiles filtrantes le long de leurs parties de trajets contigus et pinçant les toiles ; l'un des rouleaux consistant en un tambour, et lesdites toi les filtrantes entourant ledit tambour sur une majeure partie de sa circonférence et passant entre ledit tambour et lesdits rouleaux pinceurs, caractérisé en ce que le filtre comporte un chemin de roulement rigide incurvé entourant au moins partiellement ledit tambour et espacé de celui-ci suivant un intervalle prédéterminé, et une pluralité de rouleaux pinceurs montés roulants sur ledit chemin de roulement pour former une chaîne sans fin parcourant un trajet fermé avec un tronçon aller le long du chemin de roulement et un tronçon retour extérieur au chemin de roulement et en ce que le tambour comporte des passages de drainage traversant sa périphérie.

Une des caractéristiques de l'invention réside donc dans un ensemble comprenant un tambour drainant et de nombreux rouleaux reliés en chaîne roulant sur un chemin de roulement courbe. Les toiles filtrantes contenant la matière à essorer sont prises entre le tambour et la chaîne. La courbure du chemin de roulement est telle que l'espace entre le tambour et la chaîne décroît au cours de la rotation. La matière se trouve ainsi comprimée progressivement au fur et à mesure qu'elle avance tout en subissant un effet de cisaillement à chaque passage sur un rouleau.

On peut de cette façon ménager un grand nombre d'étages de compression par pincement entre le tambour et autant de rouleaux que l'on désire sans qu'il soit nécessaire de faire appel à des rouleaux robustes puisqu'ils sont soutenus par un chemin de roulement rigide qui leur permet de résister sans fléchir à la pression générée par le coincement de la matière. On fait de plus l'économie de roulements et des articulations à vérins évoquées précédemment.

Selon une autre caractéristique préférée, les deux toiles filtrantes sont soumises à de faibles tensions tandis que leur entraînement est assuré par une troisième bande dite bande d'entraînement.

On peut ainsi choisir, d'une part, des toiles filtrantes constituées par une toile ayant avant tout en très bon seuil de filtration et, d'autre part, une bande d'entraînement très résistante à la traction.

Une autre caractéristique préférée de l'invention consiste à monter le tambour sur un arbre fixe doté d'excentriques. En faisant varier l'angle à l'arbre, on modifie la position du tambour par rapport au chemin de roulement et en même temps le rapport entre l'ouverture à l'entrée et l'ouverture à la sortie, c'est-à-dire le taux de compression.

Comme l'effort de traction de la bande d'entraînement dépend de la pression qui s'exerce sur elle, on peut maintenir le taux de compression à la valeur maximale en le réglant manuellement ou automatiquement à partir du couple d'entraînement. On utilise ainsi le maximum des possibilités de la machine.

Après une première compression modérée obtenue par des moyens classiques, il se peut que la matière garde une tendance au fluage en pénétrant entre le tambour drainant et la chaîne de rouleaux pinceurs. C'est pourquoi la présente invention se caractérise également par un tambour drainant doté de flasques de part et d'autre pour contenir la matière qui aurait tendance à s'échapper et guider la chaîne à rouleaux par la même occasion.

Il devient possible d'alimenter les bandes filtrantes de la presse sur une plus grande largeur que ne le font les presses actuelles et d'obtenir par conséquent un meilleur rendement de production.

L'invention sera maintenant décrite à l'aide des dessins annexés dans lesquels :
- la figure 1 est une vue en coupe longitudinale d'un filtre-presse selon l'invention ;
- la figure 2 est une vue en coupe axiale du tambour du filtre-presse de la figure 1, prise suivant la ligne II-II ;
- la figure 3 est une vue en coupe agrandie d'un détail de la figure 2, compris dans la zone III, et
- les figures 4 et 5 sont des vues analogues à celle de la figure 3, illustrant deux autres modes de réalisation.

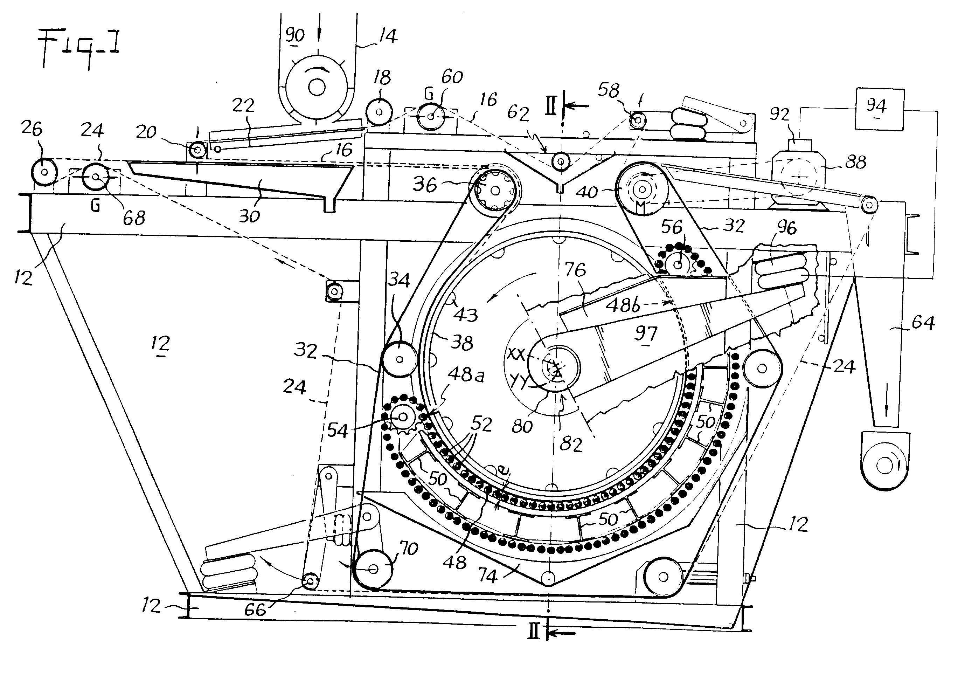

Le filtre-presse à fonctionnement continu selon l'invention se compose d'un châssis 12 et d'un certain nombre de rouleaux, ainsi qu'un tambour, qui supportent deux toiles filtrantes sans fin conjuguées ainsi qu'il va être décrit en relation avec la figure 1.

A l'entrée de la machine, une trémie d'alimentation 14 ou tout autre dispositif équivalent, comme par exemple une pompe volumétrique refoulant à travers un répartiteur, est destinée à distribuer régulièrement des matières à filtrer sur une première toile filtrante 16 sans fin.

Cette première toile filtrante est guidée en légère pente descendante au niveau de la trémie 14, entre deux rouleaux 18 et 20, au-dessus d'un bac d'égouttage 22 qui recueille une partie du liquide contenu dans les matières à filtrer.

Au niveau du rouleau 20, la toile 16 subit un changement de direction d'environ 180° et rejoint la seconde toile filtrante 24, tendue à faible distance au-dessous de la première entre deux rouleaux 26 et 36, également en légère pente descendante au-dessus d'un second bac d'égouttage 30.

Les deux toiles s'enroulent ensemble autour du rouleau 36 où elles sont rejointes par une bande d'entraînement 32. A partir de là, les deux toiles filtrantes et la bande d'entraînement cheminent ensemble dans le filtre-presse en emprisonnant entre elles les matières à filtrer, jusqu'au point de leur séparation comme il sera vu ci-après.

Le rouleau 36 est situé pratiquement au-dessus du tambour de filtration afin que l'ensemble toiles filtrantes-matières-bande s'enroule autour du tambour 38 sur la majeure partie de la circonférence de ce dernier jusqu'à un rouleau de sortie 40 qui est également le rouleau moteur pour l'entraînement de la bande d'entraînement.

Un rouleau égalisateur 34 est placé face au tambour 38 dans la zone initiale de contact de la bande d'entraînement 32 et des toiles 16,24 sur le tambour 38.

Le rôle de ce rouleau est essentiellement d'égaliser la couche de matières à filtrer avant de poursuivre le cheminement autour du tambour.

Il assure également le guidage de la bande 32 avant qu'elle parvienne au rouleau 36.

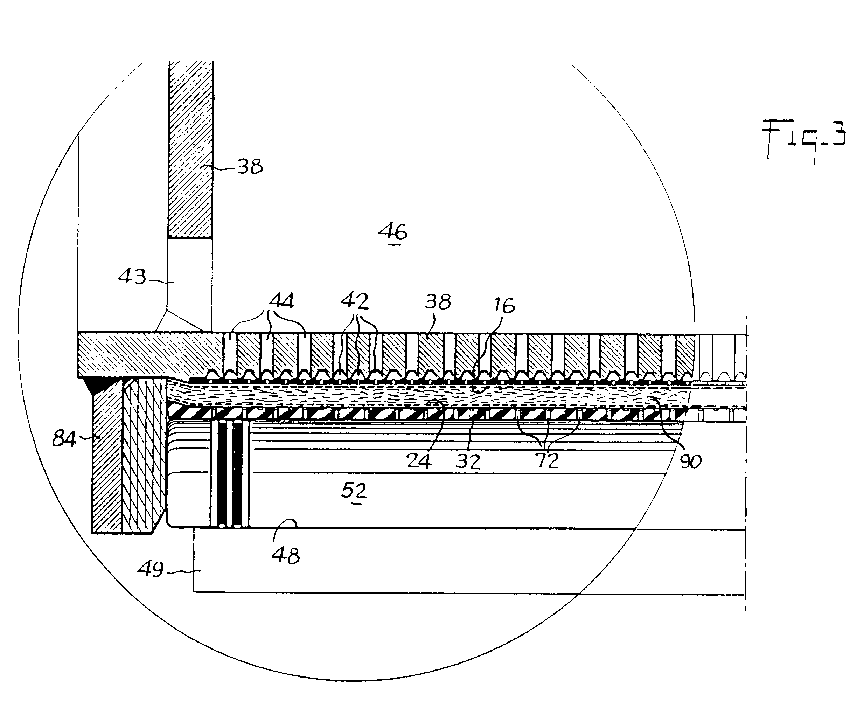

Selon le mode de réalisation illustré à la figure 3, le tambour 38 est pourvu de rainures périphériques 42, assurant le drainage des liquides traversant la toile filtrante 16 appliquée contre le tambour, et de multiples trous 44, assurant la communication des rainures 42 avec le volume intérieur 46 du tambour, ce dernier débouchant sur l'extérieur par des passages latéraux 43.

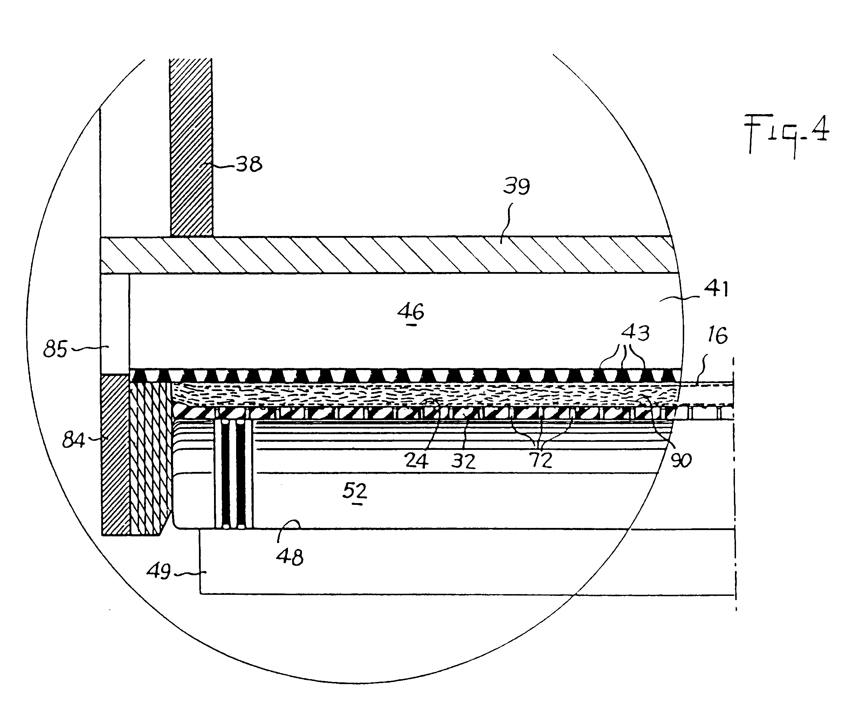

Selon la variante illustrée à la figure 4, le tambour comporte un cylindre extérieur 39 massif muni de nervures 41 parallèles à son axe et autour desquelles est enroulé un fil d'acier 43, à spires non jointives. Le fil peut avoir une section trapézoïdales, comme illustré, la petite base du trapèze étant tournée du côté intérieur en contact avec les nervures 41. Cet arrangement constitue ce qu'il est convenu d'appeler une grille "JOHNSON".

Ainsi se trouve délimité un volume de drainage entre les spires du fil 43 et le cylindre 39 du tambour, volume qui débouche vers l'extérieur à ses deux extrémités, au moyen de passages 85 ménagés dans des flasques 84 décrits plus loin.

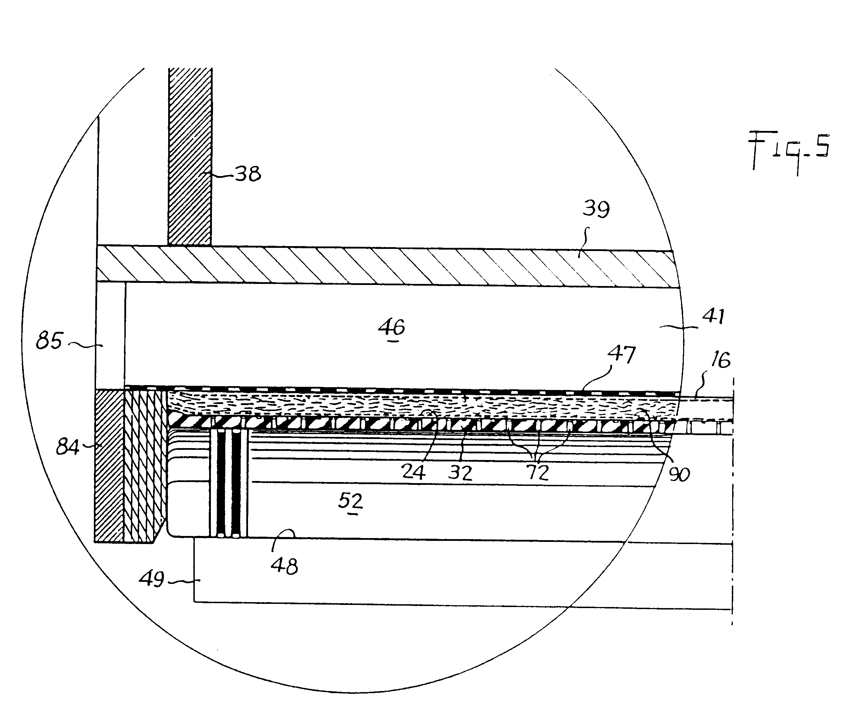

Selon la variante illustrée à la figure 5, le tambour comporte également un cylindre extérieur 39 massif muni de nervures 41 parallèles à son axe. Une grille à micro-perforations 47, est enroulée autour des nervures 41.

Dans les deux cas, le liquide filtré ne pénètre pas à l'intérieur du tambour, ce qui évite sa corrosion. Le nombre de pièces à réaliser en matériau résistant à la corrosion, ou à protéger contre la corrosion sera donc limité.

Sur environ 180°, le tambour est entouré par un chemin de roulement rigide incurvé 48 porté par un bâti 50 solidaire du châssis 12 du filtre-presse. Sur le chemin de roulement est disposée une pluralité de rouleaux pinceurs 52 reliés entre eux à leurs extrémités par des maillons (non représentés) afin de constituer une chaîne de rouleaux pinceurs circulant à intervalles réguliers le long d'un trajet en boucle fermée, composé d'un tronçon intérieur le long duquel les rouleaux pinceurs roulent le long du chemin de roulement 48 en étant emprisonnés entre le chemin de roulement rigide et la bande d'entraînement 32.

L'intervalle e qui sépare la périphérie du tambour 38 et le chemin de roulement 48 est progressivement décroissant depuis l'extrémité d'entrée 48a du chemin de roulement et son extrémité de sortie 48b, de telle sorte que l'intervalle séparant les deux toiles filtrantes 16, 24 est corrélativement décroissant.

Le trajet des rouleaux pinceurs se compose également d'un tronçon de retour extérieur au bâti 50, la liaison entre les tronçons intérieur et extérieur s'effectuant par enroulement des rouleaux pinceurs autour de roues dentées de renvoi 54, 56.

Comme indiqué précédemment, les deux toiles filtrantes 16, 24 et la bande d'entraînement 32 se séparent au niveau du rouleau moteur 40. La toile filtrante 16 retourne jusqu'à la trémie d'alimentation 14 en passant par la partie supérieure du filtre sur un rouleau de tension et un rouleau de guidage 60 et en traversant un dispositif de lavage 62.

La toile filtrante 24 retourne au rouleau 26 en passant par la partie inférieure du filtre, via une trémie de réception 64 des matières pressées et filtrées, un rouleau de tensionnement 66 et un rouleau de guidage 68 et en traversant également une installation de lavage non représentée.

La bande d'entraînement 32 retourne également vers le rouleau 28 en passant par la partie inférieure du filtre, via un rouleau de tensionnement 70.

Cette bande d'entraînement comporte des passages traversants 72 (Fig. 3) afin de permettre l'écoulement des liquides entre les rouleaux pinceurs 52 jusqu'au chemin de roulement 48. Elle peut être constituée aussi par un matériau suffisamment perméable, ou être réalisée par plusieurs courroies placées côte à côte. Ces liquides s'écoulent ensuite par les bords du chemin de roulement 48 via des trous d'évacuation non représentés et sont recueillis dans une cuvette 74 qui s'étend sur toute la surface inférieure au-dessous du tambour 38 et de l'ensemble de rouleaux pinceurs 52.

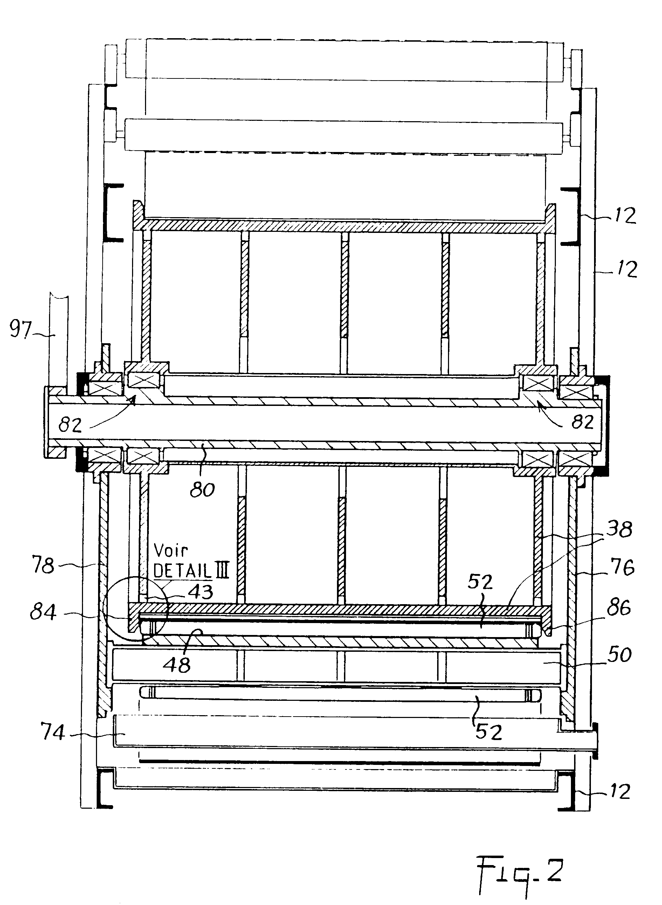

Le bâti 50 du chemin de roulement 48 est solidaire de deux joues latérales 76, 78 (Fig. 2), seul l'une des deux étant visible par arrachement partiel de la figure 1, qui portent l'arbre 80 du tambour 38 muni de deux excentriques 82 autour desquels tourne le tambour. Ainsi en faisant pivoter légèrement l'arbre 80, on peut faire varier à volonté la position de l'axe du tambour XX par rapport à l'axe de courbure YY du chemin de roulement 48 et, par conséquent, le degré de variation de l'intervalle e séparant le tambour du chemin de roulement en fonction des conditions de filtration.

Comme le montrent la figure 2 et la vue agrandie de la figure 3, le tambour 38 est bordé à ses deux extrémités par deux flasques radiaux 84 et 86, séparés l'un de l'autre d'une distance égale, aux tolérances près, à la longueur des rouleaux pinceurs 52. Cette disposition présente le double avantage de guider les rouleaux pinceurs avec précision et de former un barrage efficace en bordure des toiles filtrantes 16, 24. De plus, si les rouleaux se mettent légèrement de travers par rapport au tambour, ils sont ramenés automatiquement en orientation parallèle à l'axe du tambour par frottement contre l'un des flasques qui a une vitesse tangentielle double de la vitesse de déplacement des rouleaux.

Le filtre-presse fonctionne de la manière suivante :
Un moteur 88 entraîne le rouleau moteur 40 et la bande d'entraînement 32. A son tour, du fait de son enroulement autour des deux toiles filtrantes 16, 24 sur la majeure partie de la circonférence du tambour 38, la bande d'entraînement 32 entraîne les toiles filtrantes dans le sens du parcours décrit ci-avant.

Les matières à filtrer 90 déversées en nappe sur la toile filtrante 16 depuis la trémie 14 suivent la pente descendante de la toile filtrante 16, en s'égouttant dans le bac 22, jusqu'au rouleau 20 à partir duquel elles sont emprisonnées entre les deux toiles 16 et 24.

Après le rouleau de renvoi 36 et autour du tambour 38, la bande d'entraînement 32 plaque les deux toiles filtrantes 16, 24 et les matières 90 emprisonnées contre le tambour 38. A partir du début 48a du chemin de roulement 48, les matières à filtrer 90 subissent des alternances de compression/cisaillement puis de relaxation au passage sur chaque rouleau pinceur 52 et ceci successivement jusqu'à la fin du chemin de roulement 48b, l'espace entre toiles filtrantes 16, 24 se réduisant progressivement comme il a été expliqué.

A chaque alternance de compression/cisaillement puis de relaxation, les matières solides subissent un fluage grâce auquel le volume intersticiel réservé aux liquides se réduit de plus en plus.

Etant donné également que les toiles filtrantes 16, 24 et la bande d'entraînement 32 occupent toute la largeur entre les flasques 84, 86 du tambour 38 (voir figure 3), ces derniers empêchent tout débordement des matières 90 sur les bordures des toiles filtrantes 16, 24, débordement qui pourrait autrement se produire en l'absence d'un tel arrangement.

Grâce au montage des rouleaux pinceurs 52, réalisés de préférence à partir de tubes ou de ronds en acier et garnis de revêtement en matière plastique appropriée, se déplaçant sur un chemin de roulement rigide 48, réalisé de préférence par une tôle métallique 49 cintrée à la courbure voulue, de forte épaisseur et supportée par des profils résistants de forte section en U ou en I, on évite tout fléchissement des rouleaux pinceurs 52, ainsi que toute usure dans leur supportage.

Ainsi, après leur sortie des rouleaux pinceurs 52, les matières emprisonnées 90 entre les toiles filtrantes 16, 24 ont une concentration en matières solides très élevée.

Comme on le comprendra aisément, le filtre-presse a une conception à la fois simple et extrêmement robuste qui résulte en un rapport performance/coût attractif. Cette robustesse résulte également de l'utilisation d'une bande d'entraînement 32 distincte des deux toiles filtrantes 16, 24. En effet, la force motrice et la force résistante, essentiellement la somme des forces résultant du coincement des matières au passage de chaque rouleau pinceur 52, sont encaissées par la seule bande d'entraînement 32, dont la structure peut être définie à cette seule fin, excepté les passages 72 qui la traversent à intervalles réguliers pour le drainage des liquides, tandis que les toiles filtrantes 16, 24 ne supportent que des efforts relativement faibles et peuvent être conçues uniquement en vue de remplir parfaitement leur rôle de filtration, sans qu'il soit besoin d'effectuer un compromis entre des impératifs d'efficacité et de résistance comme cela est le cas dans les filtres connus de l'état de la technique.

Avantageusement, la bande d'entraînement 32 pourra être réalisée en une toile de fils de haute résistance.

Par ailleurs, le filtre se prête aisément à une régulation de fonctionnement, grâce à un dispositif de commande optionnel schématisé comme suit : un capteur de couple 92 délivre un signal représentatif du couple moteur fourni par le moteur 88 d'entraînement du rouleau 40. Une unité de commande 94 compare ce signal à une valeur de consigne prédéterminée, éventuellement réglable, et fournit un signal de commande, positif ou négatif, fonction de l'écart entre le signal et la valeur de consigne.

Un servomoteur 96, associé à un levier 97 solidaire de l'arbre 80 du tambour 38, reçoit le signal de commande et fait pivoter cet arbre, ainsi que les excentriques 82 dont il est muni dans un sens ou l'autre selon le signe et l'amplitude du signal reçu, afin de réduire ou d'augmenter la variation de l'intervalle e tambour 38/chemin de roulement 48.

Ainsi, si la réduction de l'intervalle, mesuré à l'entrée 48a et à la sortie 48b du chemin de roulement, est élevée, les forces résistantes sur la bande d'entraînement 32 seront également élevées et se traduiront par un couple moteur important. Le dispositif de commande 92, 94, 96, 97 réagira alors en déplaçant l'arbre 80 et les excentriques de montage 82 du tambour 38 dans un sens qui ramènera la réduction de l'intervalle e à une valeur plus faible.

Selon les propriétés des liquides à filtrer et/ou des matières qu'ils contiennent, notamment des propriétés corrosives, les différentes pièces constitutives du filtre pourront recevoir des revêtements et/ou des traitements de surface appropriés, ou encore être réalisées en des matériaux résistants à la corrosion.

On remarquera que le filtre-presse selon la présente invention présente des dimensions, notamment son encombrement au sol, extrêmement réduites essentiellement grâce à sa conception qui permet d'assurer un grand nombre de compressions suivie de relaxations successives sur un parcours extrêmement court.

A l'exception du tambour 38, dont le diamètre peut varier de quelques dizaines de centimètres à quelques mètres selon les applications envisagées, toutes les pièces mobiles sont de dimensions modestes et peuvent être aisément déposées, en cas de maintenance périodique ou de réparation.

Enfin, l'expression chemin de roulement incurvé doit être comprise comme englobant différents profils incurvés, le plus simple étant un profil circulaire, et des profils élaborés, à courbure logarithmique par exemple, peuvent être envisagés. Dans ces cas, la surface interne du chemin de roulement pourra être amenée au profil souhaité soit lors de son cintrage, soit par usinage sur machine.

## Revendications

1. Filtre-presse comprenant un châssis (12), deux toi les filtrantes (16, 24) en boucle fermée, des rouleaux de renvoi montés sur le châssis et définissant des trajets pour les deux toiles, lesdits trajets étant au moins partiellement contigus, et plusieurs ensembles de rouleaux placés de part et d'autre des toi les filtrantes le long de leurs parties de trajets contigus et pinçant les toiles ; l'un des rouleaux consistant en un tambour (38), et lesdites toiles filtrantes (16, 24) entourant ledit tambour (38) sur une majeure partie de sa circonférence et passant entre ledit tambour et des rouleaux pinceurs (52), caractérisé en ce que le filtre comporte un chemin de roulement rigide (48) incurvé entourant au moins partiellement ledit tambour et espacé de celui-ci suivant un intervalle prédéterminé (e), et une pluralité de rouleaux pinceurs (52) sont montés roulants sur ledit chemin de roulement (48) pour former une chaîne sans fin parcourant un trajet fermé avec un tronçon aller le long du chemin de roulement (48) et un tronçon retour extérieur au chemin de roulement et en ce que le tambour (38) comporte des passages de drainage (42, 44) traversant sa périphérie.

2. Filtre-presse selon la revendication 1, caractérisé en ce que le tambour (38) comporte un cylindre extérieur massif (39) muni de nervures (41) parallèles à son axe, et un fil (43) enroulé à spires non jointives autour des nervures.

3. Filtre-presse selon la revendication 1, caractérisé en ce que le tambour (38) comporte un cylindre extérieur massif (39) muni de nervures (41) parallèles à son axe, et une grille à microperforations (47) enroulée autour des nervures.

4. Filtre-presse selon l'une quelconque des revendications 1 à 3, caractérisé en ce que le tambour (38) comporte deux flasques radiaux (84, 86) à ses extrémités, lesdits flasques étant séparés par une distance pratiquement égale à la longueur des rouleaux pinceurs (52).

5. Filtre-presse selon la revendication 3, caractérisé en ce que les toiles filtrantes (16, 24) ont une largeur pratiquement égale à la distance séparant les flasques (84, 86) du tambour (38).

6. Filtre-presse selon l'une quelconque des revendications 1 à 5, caractérisé en ce qu'il comporte une bande d'entraînement (32) en boucle fermée, des rouleaux définissant un trajet pour ladite bande, ledit trajet étant également contigu aux trajets des toiles filtrantes (16, 24) au moins dans l'intervalle séparant le tambour (38) du chemin de roulement (48), la bande d'entraînement (32) y étant disposée entre les rouleaux pinceurs (52) et les toiles filtrantes (16, 24).

7. Filtre-presse selon la revendication 6, caractérisé en ce que la bande d'entraînement (32) comporte également des passages de drainage (72) la traversant.

8. Filtre-presse selon la revendication 6, caractérisé en ce que la bande d'entraînement (32) est réalisée sous forme d'une toile.

9. Filtre-presse selon l'une quelconque des revendications 6 à 8 prises en dépendance de la revendication 4, caractérisé en ce que la bande d'entraînement (32) a une largeur pratiquement égale à la distance séparant les flasques (84, 86) du tambour (38).

10. Filtre-presse selon l'une quelconque des revendications 1 à 9, caractérisé en ce que le chemin de roulement (48) comporte un bâti (50) solidaire du châssis du filtre (12), ledit bâti comportant des joues latérales (76, 78) supportant l'arbre (80) dudit tambour (38), ledit arbre comportant des excentriques (82) réglables par pivotement de l'arbre.

11. Filtre-presse selon l'une quelconque des revendications 7 à 10 prises en dépendance de la revendication 2, caractérisé en ce que le tambour (38), les rouleaux de renvoi (18, 20, 26, 34, 36, 58, 60, 66, 68, 78) des toiles filtrantes et de la bande d'entraînement et les rouleaux pinceurs (52) sont montés à libre rotation, à l'exception de l'un des rouleaux de renvoi (40) de la bande d'entraînement (32), lequel est couplé à un dispositif d'entraînement à moteur (88).

12. Filtre-presse selon la revendication 11 prise en combinaison avec la revendication 5, caractérisé en ce qu'il comporte un dispositif de commande (92, 94, 96, 97) constitué d'un détecteur de couple (92) associé au dispositif d'entraînement à moteur (88), d'une unité de commande (94) et d'un servomoteur de réglage (96) associés à l'arbre de tambour à excentriques (82).

## Claims

1. Press-filter guide comprising a chassis (12), two endless filtering webs (19, 24) rollers mounted on to the chassis and defining paths for the two webs, which paths are at least partially contiguous, and several sets of guide rollers located on either side of the filtering webs along their contiguous path portions and squeezing the webs; one of the rollers consisting in a drum (38), and said filtering webs (16, 24) encircling said drum (38) over most of its circumference and passing between said drum and squeezing rollers (52), characterized in that the filter comprises a curved rigid roller race (48) at least partially encircling said drum and spaced therefrom by a predetermined gap (e), and a plurality of squeezing rollers (52) are rollably mounted on said roller race (48), so as to form an endless chain following a closed path with an outward portion along the roller race (48) and a return portion external to the roller race and in that the drum (38) comprises draining passages (42, 44) provided through its periphery.

2. Press-filter according to claim 1, characterized in that the drum (38) comprises a one-piece outer cylinder (39) provided with ribs (41) parallel to its axis, and a wire (43) wound around the ribs into a succession of non-contacting wounds.

3. Press-filter according to claim 1, characterized in that the drum (38) comprises a one-piece outer cylinder (39) provided with ribs (41) parallel to its axis, and a low-gauge mesh (47) wound around the ribs.

4. Press-filter according to any one of claims 1 to 3, characterized in that the drum (38) is provided with two radial end flanges (84, 86), said flanges being spaced apart by a distance substantially equal to the length of the squeezing rollers (52).

5. Press-filter according to claim 3, characterized in that the filtering webs (16, 24) have a width substantially equal to the distance between the flanges (84, 86) of the drum (38).

6. Press-filter according to any one of claims 1 to 5, characterized in that it comprises a closed loop leading web (32), rollers defining a path for said web, said path being also contiguous to the paths of the filtering webs (16, 24), at least within the gap separating the drum (38) from the roller race (48), the leading web (32) being located therein between the squeezing rollers (52) and the filtering webs (16, 24).

7. Press-filter according to claim 6, characterized in that the leading web (32) comprises draining passages (72) provided therethrough.

8. Press-filter according to claim 6, characterized in that the leading web (32) is made in the form of a cloth.

9. Press-filter according to any one of claims 6 to 8, taken as depending of claim 4, characterized in that the leading web (32) has a width substantially equal to the distance between the flanges (84, 86) of the drum (38).

10. Press-filter according to any one of claims 1 to 9, characterized in that the roller race (48) comprises a frame (50) fixedly attached to the chassis of the filter (12), said frame comprising side plates (76, 78) which support the shaft (80) of the drum (38), said shaft comprising eccentric members (82) which are adjustable by pivoting the shaft.

11. Press-filter according to any one of claims 7 to 10 taken as depending of claim 2, characterized in that the drum (38), the guide rollers (18, 20, 26, 34, 36, 58, 60, 66, 68, 78) for the filtering webs and for the leading web and the squeezing rollers (52) are idle rollers, except for one of the guide rollers (40) for the leading web (32) which is coupled to a motor drive (88).

12. Press-filter according to claim 11, taken in combination with claim 5, characterized in that it comprises a control unit (92, 94, 96, 97) constituted of a torque sensor (92) associated to the motor drive (88), of a control unit (94) and of an adjustment servomechanism (96) associated to the drum shaft having eccentric members (82).

## Patentansprüche

1. Filterpresse, bestehend aus einem Gestell (12), zwei Endlos-Filterbändern (16 bzw. 24), auf dem Gestell montierten und den Weg der beiden Endlos-Filterbänder definierenden Unterbandrollen, wobei diese Wege wenigstens teilweise gleichlaufen, und mehreren Rolleneinheiten, die auf beiden Seiten der Filterbänder an der Strecke, an der diese nebeneinanderlaufen, platziert sind und diese zusammendrücken; wobei eine dieser Rollen aus einer Trommel besteht (38) und die genannten Filterbänder (16 bzw. 24) um den größten Teil der genannten Trommel (38) herumlaufen und zwar zwischen der genannten Trommel und den Andrückrollen (52), dadurch gekennzeichnet, daß der Filter einen gebogenen starren Laufring (48) umfaßt, der die genannte Trommel wenigstens teilweise umgibt und von dieser in einem bestimmten Abstand (e) entfernt ist, und eine Anzahl von Andrückrollen (52) so montiert sind, daß sie auf dem Laufring (48) rollen und eine Endlos-Kette in einem geschlossenen Kreislauf bilden, bei dem ein Teil des Hinwegs entlang dem Rollweg (48) und ein Teil des Rückwegs außerhalb des Rollwegs zurückgelegt wird, und daß die Trommel (38) außen herum einen Durchlaß für die Drainage (42 bzw. 44) umfaßt.

2. Filterpresse gemäß Patentanspruch 1, dadurch gekennzeichnet, daß die Trommel (38) einen massiven Außenzylinder (39) umfaßt, der mit Stegen (41) ausgestattet ist, die parallel zur Achse des Zylinders laufen, und einen Draht (43), der um die Stege in nicht nebeneinanderliegenden Windungen gerollt ist.

3. Filterpresse gemäß Patentanspruch 1, dadurch gekennzeichnet, daß die Trommel (38) einen massiven Außenzylinder (39) umfaßt, der mit Stegen (41) ausgestattet ist, die parallel zur Achse des Zylinders laufen, und mit einem Gitter mit winzigen Löchern (47), die um die Stege laufen.

4. Filterpresse gemäß einem der Patentansprüche 1 - 3, dadurch gekennzeichnet, daß die Trommel (38) an beiden Enden einen Radialflansch (84 bzw. 86) umfaßt, wobei die Distanz zwischen den beiden Flanschen praktisch der Länge der Andrückrollen (52) entspricht.

5. Filterpresse gemäß Patentanspruch 3, dadurch gekennzeichnet, daß die Breite der Filterbänder (16 bzw. 24) praktisch dem Abstand zwischen den beiden Flanschen (84 bzw. 86) der Trommel (38) entspricht.

6. Filterpresse gemäß einem der Patentansprüche 1 - 5, dadurch gekennzeichnet, daß sie ein Antriebsband (32) im geschlossenen Kreislauf umfaßt, wobei Rollen den Weg der genannten Bänder definieren, der auch mit dem Weg der Filterbänder (16 bzw. 24) wenigstens im Zwischenraum zwischen der Trommel (38) und Rollweg (48) gleichläuft, wobei sich das Antriebsband (32) zwischen den Andrückrollen (52) und den Filterbändern (16 bzw. 24) befindet.

7. Filterpresse gemäß Patentanspruch 6, dadurch gekennzeichnet, daß das Antriebsband (32) auch Durchlässe für die Drainage (72) umfaßt.

8. Filterpresse gemäß Patentanspruch 6, dadurch gekennzeichnet, daß das Antriebsband (32) in Form eines Stoffbands ausgeführt ist.

9. Filterpesse gemäß einem der Patentansprüche 6 - 8 in Abhängigkeit von Patentanspruch 4, dadurch gekennzeichnet, daß das Antriebsband (32) praktisch so breit ist wie der Abstand zwischen den Flanschen (84 bzw. 86) der Trommel (38).

10. Filterpresse gemäß einem der Patentansprüche 1 - 9, dadurch gekennzeichnet, daß der Rollweg (48) ein Gestell (50) umfaßt, der mit dem Gestell des Filters (12) fest verbunden ist, wobei das Gestell Seitenteile (76 bzw. 78) zur Aufnahme der Welle (80) der besagten Trommel (38) umfaßt, wobei die Welle Schwungräder (82) umfaßt, die durch Schwenken der Welle eingestellt werden können.

11. Filterpresse gemäß einem der Patentansprüche 7 - 10 in Abhängigkeit von Patentanspruch 2, dadurch gekennzeichnet, daß die Trommel (38), die Umlenkrollen (18, 20, 26 34, 36, 58, 60, 66, 68, 78) der Filterbänder und der Antriebsbänder und die Andrückrollen (52) mit Ausnahme einer der Umlenkrollen (40) des Antriebsbands (32), die mit dem Motorantriebssystem (88) gekuppelt ist, so montiert sind, daß sie sich frei drehen können.

12. Filterpresse gemäß Patentanspruch 11 zusammen mit Patentanspruch 5, dadurch gekennzeichnet, daß sie ein Steuersystem (92, 94, 96, 97) umfaßt, das aus einem mit dem Motorantriebssystem (88) verbundenen Drehmomentfühler (92), einer Steuereinheit (94) und einem Regelmotor (96) besteht, das mit der Trommelwelle mit Schwungrad (82) verbunden ist.
